Europäisches Patentamt

European Patent Office

Office européen des brevets

(11) Publication number: **0 443 652 A1**

(12) **EUROPEAN PATENT APPLICATION**

(21) Application number: 91200238.3

(22) Date of filing: 05.02.91

(51) Int. Cl.5: **B23K 37/053**

(30) Priority: 07.02.90 NL 9000295

(43) Date of publication of application:
28.08.91 Bulletin 91/35

(84) Designated Contracting States:
AT BE CH DE DK ES FR GB GR IT LI LU NL SE

(71) Applicant: DALSEM DBM B.V.
Woudseweg 9
NL-2635 CG Den Hoorn(NL)

(72) Inventor: Isendam, Jules Nigel
Rijnbandijk 40
NL-4041 EE Kesteren(NL)

(74) Representative: de Bruijn, Leendert C. et al
Nederlandsch Octrooibureau
Scheveningseweg 82 P.O. Box 29720
NL-2502 LS 's-Gravenhage(NL)

(54) **Device for the production of double-walled segment bends, intended for the discharge of flue gases.**

(57) Device for the production of a double-walled bend formed from two segments (C and D), for a flue, in which the ends of the two segments lying against each other at an angle are joined to each other, and device comprises two essentially identical parts (A and B) which, after combining and centring, with the segments (C and D) to be joined together on it can be rotated in one piece about a common central axis (E) lying at right angles to the joining face between the two segments and passing through the centre of the elliptical weld seam to be formed, the central axis of each part of the device (A and B) coinciding with the central axis (E) of each bend segment (C and D) fitting thereon, and means being present to tension radially and press axially relative to each other the bend segments to be joined together.

# DEVICE FOR THE PRODUCTION OF DOUBLE-WALLED SEGMENT BENDS, INTENDED FOR THE DISCHARGE OF FLUE GASES.

The invention relates to a device for the production of a double-walled bend formed from two segments, for a flue, in which the ends of the two segments lying against each other at an angle are joined to each other.

Such bends formed from two segments form part of flues for gas-fired or oil-fired systems, such as heating systems or diesel units.

The flue gases of such systems have temperatures actually reaching 600° C.

Such flues can be of many different lengths and diameters and are made of rust-resistant sheets approximately 0.5 mm thick bent into pipe form and welded, two of such pipes being disposed inside one another in order to form an air gap between the pipes, which prevents condensation and forms a heat insulation.

Although it is technically possible to make straight double-walled flue pipes which are leak-free, this has not been the case until now with segment bends which are to form part of a flue.

The object of the invention is therefore to provide a device by means of which it is possible to produce segment bends which are leak-free.

This is achieved according to the invention in that the device comprises two essentially identical parts which, after joining and centring, with the segments to be joined together on it can be rotated in one piece about a common central axis lying at right angles to the joining face between the two segments and passing through the centre of the elliptical weld seam to be formed, the central axis of each part of the device coinciding with the central axis of each bend segment fitting thereon, and means being present to tension radially and press axially relative to each other the bend segments to be joined together.

A leak-free welded joint can be achieved in this way by means of a three-dimensionally movable welding robot, which is known per se.

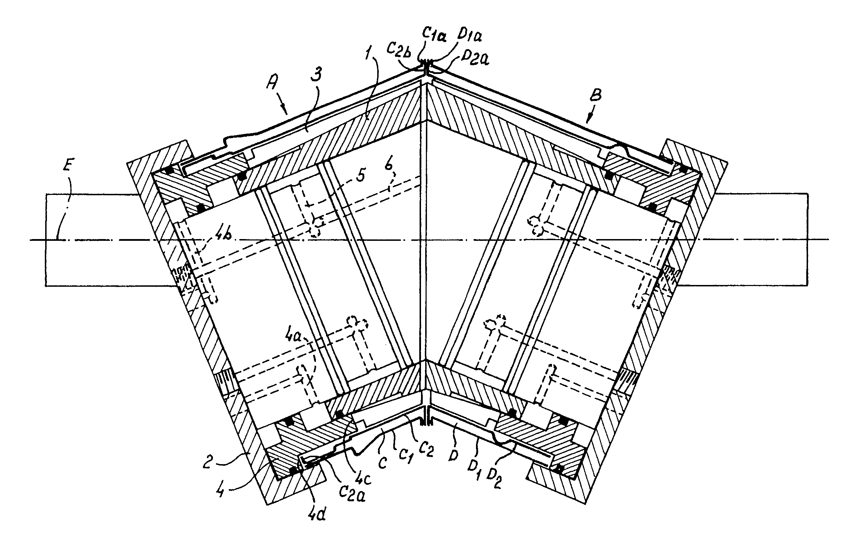

The invention will be explained with reference to the drawing, in which the single figure shows a longitudinal section through the device according to the invention with around it the two bend segments to be joined together.

The device comprises two essentially identical parts A and B, so that only one part need be discussed in detail. The angle between the two parts A and B determines the angle between the two bend segments C and D. The external diameter of the device is adapted to the desired internal diameter of the segment bend to be produced.

The bend segments C and D are made beforehand from thin-walled rust-resistant sheet material, which is formed by a longitudinal seam (not shown) into a pipe. For the formation of the desired angle between them, the pipe formed is cut off at an angle, so that the ends of the segments C and D shown resting against each other are formed.

The bend segment C comprises an outer pipe $C_1$ and an inner pipe $C_2$.

The inner pipe $C_2$ is provided at one end with an inwardly directed square flange $C_2a$ and at the other end with an outwardly directed slanting flange $C_2b$.

The inner pipe $D_2$ is provided at one end with an outwardly directed slanting flange $D_2a$.

The outer pipe $C_1$ is provided at one end with a shorter slanting flange $C_1a$ and the outer pipe $D_1$ with a shorter slanting flange $D_1a$.

The flanges $C_1a$ and $C_2b$ of the pipe C are joined together by spot welding. This also applies to the pipe $D_1$, of which the flanges $D_1a$ and $D_2a$ are joined together.

The pipe C is slid onto the part A of the device, and the pipe D onto the part B, following which the two parts A and B are fixed centred against each other. The means for this are not shown.

The axis of rotation of the device during the welding of the segment bend is indicated by E.

Part A will now be discussed in greater detail. Part A comprises a truncated cylindrical jacket 1, provided on the straight left end with a cover 2.

The conical outside of the jacket 1 has on it tongues of copper 3 resting over the entire periphery and length against the conical outside of the jacket 1.

It is also possible to make the outside of the jacket 1 circle-cylindrical and to use tongues or the like which have a conical inner form.

Part A contains a piston 4 which can be loaded at both sides with compressed air or the like through pipes 4a and 4b.

The right side 4c of the piston 4 rests against the tongues 3, and an edge 4d of the piston 4 rests against the flange edge $C_2a$ of the bend segment C.

Cooling liquid can be fed in through a pipe system 5, and protective gas under pressure which spreads along the weld seam to be produced can be fed in through a pipe system 6.

Feeding in compressed air at the left side of piston 4 (this also applies to the right side of part B) causes the flanges $C_2b$ and $D_2a$ to be pressed against each other over the entire periphery, and the inner pipes $C_2$ and $D_2$ are centred and tensioned by the tongues 3.

The lengths of the bend segments C and D are dimensioned very accurately.

A leak-free welded joint between the bend segments C and D is obtained by now driving the device so that it rotates non-uniformly about the axis E and moving it under a three-dimensionally movable welding torch (not shown).

This is in fact an elliptical weld seam. Welding devices for elliptical weld seams are actually known per se, but it has not proved possible hitherto to weld a double-walled segment bend so that it is leak-free. For this, riveted connections have been used until now, but they exhibit an unacceptably high leakage.

In order to assist the formation of the weld seam, a protective gas is fed in through the pipe system 6, and the tongues 3 are made of copper.

These tongues 3 of different lengths extend in the axial direction over the whole periphery of the parts A and B and are made of copper, in order to achieve good heat discharge.

Instead of a great number of tongues 3 divided over the circumference of the jacket 1 it is also possible to use a small number of segment for instance four segments each running over 90°.

In order to promote the cooling, cooling liquid is circulated through the pipe system 5.

After the welding together of the bend segments C and D, the parts A and B are detached from each other and slid out of the segment bend formed.

Straight pipe segments can be joined in a known manner to the left end of bend segment C and to the right end of bend segment D.

The device according to the invention makes it possible to join together double-walled pipes of large diameter and low wall thickness at desired angles so that they are leak-free.

## Claims

1. Device for the production of a double-walled bend formed from two segments, for a flue, in which the ends of the two segments lying against each other at an angle are joined to each other, **characterized in that** the device comprises two essentially identical parts which, after combining and centring, with the segments to be joined together on it can be rotated in one piece about a common central axis lying at right angles to the joining face between the two segments and passing through the centre of the elliptical weld seam to be formed, the central axis of each part of the device coinciding with the central axis of each bend segment fitting thereon, and means being present to tension radially and press axially relative to each other the bend segments to be joined together.

2. Device according to Claim 1, **characterized in that** each part comprises a truncated cylindrical jacket, shut off at one end by a cover, on which outer periphery are fitted axially running tongues or the like which on axial movement press against the insides of the bend segments to be joined together, in order to centre and tension the segments relative to each other, whereby either the outer periphery of the jacket or the inner periphery of the tongues or the like extends conically.

3. Device according to Claim 1 or 2, **characterized in that** the tongues or the like are made of copper.

4. Device according to Claim 1, 2 or 3, **characterized in that** the tongues or the like can be moved axially by a piston which can be loaded at both sides with compressed air or the like, and which simultaneously presses the ends of the bend segments to be joined together against each other.

5. Device according to Claim 4, **characterized in that** the piston is provided with a collar against the free end of which the bend segment rests.

6. Device according to one or more of the preceding claims, **characterized in that** means are present for cooling the device during the welding of the seam.

7. Device according to one or more of the preceding claims, **characterized in that** means are present for feeding in a protective gas to the inside of the weld seam to be formed.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 338 767 (WESTINGHOUSE ELECTRIC CORPORATION)<br>* page 4, line 1 - page 17 * * page 4, line 37 - page 5, line 30; figures 3, 6 *<br>– – – | 1 | B 23 K 37/053 |
| A | DE-A-3 520 071 (G + H MONTAGE GMBH)<br>* the whole document *<br>– – – – – | 1 | |

TECHNICAL FIELDS
SEARCHED (Int. Cl.5)

B 23 K
F 23 J

The present search report has been drawn up for all claims

| Place of search | Date of completion of search | Examiner |
|---|---|---|
| The Hague | 15 May 91 | ARAN D.D. |